# EUROPÄISCHE PATENTSCHRIFT

(11) **EP 1 304 257 B1**
(45) Veröffentlichungstag und Bekanntmachung des Hinweises auf die Patenterteilung: **27.02.2008**
(21) Anmeldenummer: 02023114.8
(22) Anmeldetag: 15.10.2002
(51) Int. Cl.: B60N 3/10, A47G 23/02

(54) **Halter für einen Getränkebehälter**
Holder for a beverage container
Support pour un récipient de boisson

(30) Priorität: 19.10.2001 DE 10151794
(43) Veröffentlichungstag der Anmeldung: 23.04.2003
(73) Patentinhaber: fischer automotive systems GmbH, 72160 Horb (DE)
(72) Erfinder: Kaupp, Klaus, 72178 Waldachtal (DE)

(56) Entgegenhaltungen:
- US-A- 5 791 618
- US-A- 5 921 519
- US-A- 6 092 775
- PATENT ABSTRACTS OF JAPAN Bd. 2000, Nr. 22, 9. März 2001 (2001-03-09) -& JP 2001 122008 A (KANTO AUTO WORKS LTD), 8. Mai 2001 (2001-05-08)

## Beschreibung

Die Erfindung betrifft einen Halter für einen Getränkebehälter wie beispielsweise eine Getränkedose, einen Becher oder eine Tasse, mit den Merkmalen des Oberbegriffs des Anspruchs 1.

Derartige Halter sind insbesondere zum Einbau in Kraftwagen bekannt. Sie weisen üblicherweise eine Aufnahme zum Einstellen des Getränkebehälters auf. Zur Anpassung des Halters an Getränkebehälter mit unterschiedlichem Durchmesser ist es bekannt, beispielsweise eine schwenkbare Durchmesserausgleichsklappe an einem Rand der Aufnahme vorzusehen, die federbeaufschlagt in die Aufnahme hinein gedrückt wird. Beim Einstellen eines Getränkebehälters in die Aufnahme drückt der Getränkebehälter die federbeaufschlagte Durchmesserausgleichsklappe soweit zur Seite wie es dem Durchmesser des Getränkebehälters entspricht. Die federbeaufschlagte Durchmesserausgleichsklappe drückt den eingestellten Getränkebehälter an eine gegenüberliegende Seite der Aufnahme und hält den Getränkebehälter dadurch kippsicher.

Aus der Druckschrift US 5,921,519, die dem Stand der Tecknik nach dem Oberbegriff des Anspruchs 1 entspricht, ist ein Ablagefach mit schwenkbar angebrachter Stütze bekannt. Ein erstes Ende dieser Stütze bildet einen Arm zum Hineinschwenken in das Ablagefach, was dem Halten eines Getränkebehälters dienen kann. Auf dem bzgl. der Schwenkachse entgegengesetzten zweiten Ende der Stütze ist ein Federelement angebracht, welches gemeinsam mit einer das zweite Ende halbkreisförmig umfassenden Umfangswand des Gehäuses eine Feststelleinrichtung bildet. Dazu kann das Federelement in eine von mehreren Vertiefungen eingreifen. Nachteilig an dieser Anordnung ist, dass Beschleunigungen, welche auf den Getränkebehälter wirken, zum Lösen der Feststelleinrichtung führen können mit der Folge, dass dieser keinen Halt mehr findet. Selbstverständlich können durch stärkere Federkräfte die Haltekräfte erhöht werden, jedoch wird die Bedienung beim Verschwenken der Stütze hierdurch ebenfalls schwieriger.

Ein ähnliches Problem liegt bei dem Ablagefach, welches die Druckschrift JP 2001-122008 offenbart, vor. Statt einer schwenkenden Stütze zieht diese Druckschrift eine linear geführte Stütze vor. Auch die Feststelleinrichtung ist linear angeordnet und weist eine Feder auf, die in eine von mehreren längs der linearen Achse angeordnete Vertiefungen eingreift. Auch hier stehen Halte- und Feststellkräfte als sich gegenseitig begrenzende Größen einander gegenüber.

Ein weiterer Getränkehalter mit schwenkbaren Stützen ist aus der US 5 791 618 bekannt.

Der Erfindung liegt daher die Aufgabe zugrunde, einen Halter zu schaffen, der geringe Kräfte zum Verstellen der Stütze aufweist, andererseits aber hohe Haltekräfte für den Fall plötzlich wirkender Beschleunigungen garantiert.

Diese Aufgabe wird erfindungsgemäß durch die Merkmale des Anspruchs 1 gelöst. Der erfindungsgemäße Halter weist eine schwenkbare Stütze auf, deren Abstand von einer Seitenwand der Aufnahme durch Schwenken der Stütze einstellbar ist. Dabei ist mit Seitenwand der Aufnahme insbesondere ein der Stütze gegenüberliegender Bereich der Aufnahme gemeint. Ein in die Aufnahme eingestellter Getränkebehälter befindet sich zwischen der Seitenwand und der Stütze und wird von diesen kippsicher gehalten. Eine Form der Stütze ist an sich beliebig, sofern sie den Zweck erfüllt, einen in die Aufnahme eingestellten Getränkebehälter im Zusammenwirken mit der Seitenwand zu halten. Mittels einer Feststelleinrichtung lässt sich die Stütze des erfindungsgemäßen Halters in ihrer jeweiligen Schwenkstellung und damit in ihrem Abstand von der Seitenwand der Aufnahme feststellen.

Die Feststelleinrichtung des erfindungsgemäßen Halters weist ein Feststellelement auf, das mit Abstand von der Schwenkachse der Stütze angeordnet und drehfest mit der Stütze verbunden ist. Das Feststellelement kann beispielsweise an einem Hebelarm angeordnet sein, der von einer Schwenkwelle der Stütze absteht. Das Feststellelement wird von einem Federelement gegen ein mit dem Halter ortsfestes Gegenelement gedrückt. Eine Verbindung zwischen dem Feststellelement und dem Gegenelement kann reib- und/oder formschlüssig sein, das Feststellelement kann also beispielsweise ein Reibbelag sein, der vom Federelement gegen eine ortsfeste Gegenfläche gedrückt wird. Das vom Federelement gegen das ortsfeste Gegenelement gedrückte Feststellelement, das drehfest mit der Stütze ist, hält die Stütze gegen Verschwenken und damit in ihrer Stellung. Zum Verstellen der Stütze lässt sich das Feststellelement gegen die Kraft des Federelements vom ortsfesten Gegenelement abheben und die Stütze verschwenken.

Erfindungsgemäß ist die Stütze durch Drücken gegen eine Kraft des Federelements vom Gegenelement lösbar, wobei diese Kraft in Richtung der Schwenkachse wirkt. Da das Lösen in einer anderen Richtung als das Verschwenken erfolgt, kann die Kraft zum Lösen gering gewählt werden, während die Kräfte, die gegen ungewünschtes Verschwenken der Stütze wirken, sehr hoch sein können.

Die Erfindung ermöglicht einen konstruktiv einfachen und aus wenigen Einzelteilen bestehenden Halter mit einer Einstellmöglichkeit für die Größe der Aufnahme für den Getränkebehälter.

Eine Ausgestaltung der Erfindung sieht vor, das Feststellelement und/oder das Gegenelement kreisbogenförmig und konzentrisch zur Schwenkachse der Stütze anzuordnen.

Um die Stütze zuverlässig in ihrer eingestellten Schwenkstellung zu halten sieht eine Ausgestaltung der Erfindung eine Rasteinrichtung als Feststelleinrichtung vor, also eine Feststelleinrichtung, bei der die Stütze durch Formschluss des Feststellelements mit dem ortsfesten Gegenelement in ihrer jeweiligen Schwenkstellung gehalten wird. Die Rasteinrichtung kann beispielsweise eine Rastnase oder einen Zapfen aufweisen, die/der in eine von einer Anzahl komplementärer Aufnehmungen eingreift, wobei jede der Ausnehmungen eine Schwenkstellung der Stütze vorgibt. Eine Ausgestaltung der Erfindung sieht eine Verzahnung für das Feststellelement und das Gegenelement vor, wobei für eines der beiden Elemente ein einzelner Zahn an sich ausreichend ist.

In bevorzugter Ausgestaltung der Erfindung sind das Feststellelement und das Gegenelement an einer Unterseite eines Bodens der Aufnahme zum Einstellen des Getränke-behälters angeordnet. Dies ermöglicht eine konstruktiv einfache Ausbildung der Feststelleinrichtung. Bei eingebautem Halter ist die Feststelleinrichtung nicht sichtbar.

In bevorzugter Ausgestaltung der Erfindung ist der Halter in ein oben offenes Ablagefach integriert. Dabei bildet ein Teil einer Seitenwand des Ablagefachs beispielsweise im Bereich einer Ecke des Ablagefachs die Seitenwand der Aufnahme des Halters für den Getränkebehälter. Die Stütze ist so angeordnet, dass sie in Schwenkstellungen verbringbar ist, in denen sie einen Bereich des Ablagefachs als Aufnahme zum Einstellen des Getränkebehälters vom übrigen Ablagefach abtrennt. Bei Nichtgebrauch lässt sich die Stütze vorzugsweise aus dem Ablagefach heraus beispielsweise in eine Ausnehmung der Seitenwand des Ablagefachs verschwenken. Die Stütze des erfindungsgemäßen Halters bildet bei Gebrauch einen Fachteiler des Ablagefachs. Diese Ausgestaltung der Erfindung hat den Vorteil einer doppelten Nutzung eines Ablagefachs zugleich auch als Halter für einen Getränkebehälter. Bei Nichtgebrauch des Halters ist das Ablagefach in seiner gesamten Größe nutzbar.

Die Erfindung wird nachfolgend anhand eines in der Zeichnung dargestellten Ausführungsbeispiels näher erläutert. Es zeigen:

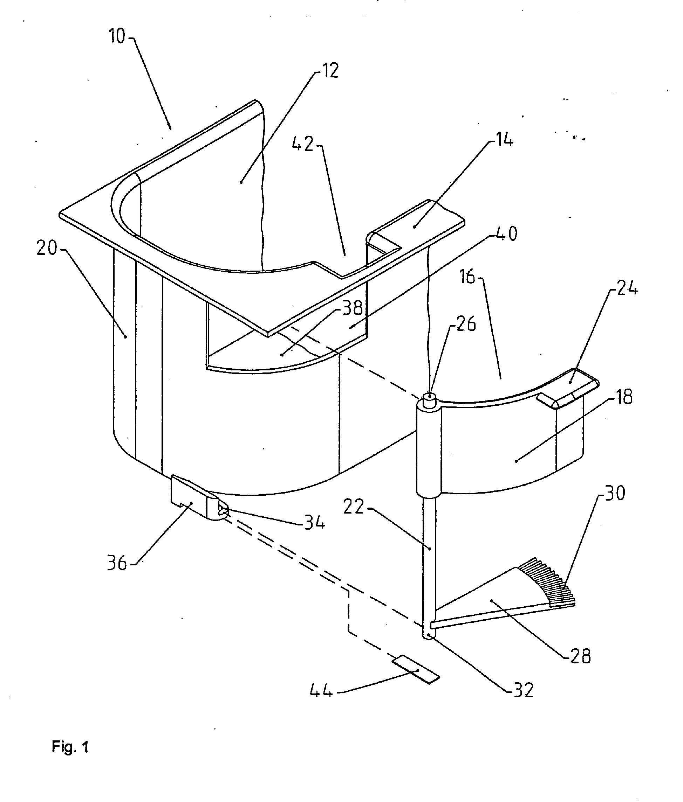

- Figur 1: die Einzelteile eines erfindungsgemäßen Halters in perspektivischer Darstellung schräg von oben;
- Figur 2: den Halter aus Figur 1 in zusammengesetztem Zustand in perspektivischer Darstellung schräg von unten, wobei die Blickrichtung derjenigen aus Figur 1 entgegengerichtet ist; und
- Figur 3: den Halter aus Figur 1 in zusammengesetztem Zustand in Gebrauch mit gleicher Blickrichtung wie in Figur 1.

Der insgesamt mit 10 bezeichnete, erfindungsgemäße Halter für einen Getränkebehälter ist in ein Ablagefach 12 integriert. Das Ablagefach 12 hat in Draufsicht die Form eines ovalen Topfs und weist einen rechteckigen Einbaurand 14 zum versenkten Einbau des Ablagefachs 12 in beispielsweise einen nicht dargestellten Kraftwagen auf. Vom Ablagefach 12 ist in der Zeichnung lediglich ein Ende dargestellt.

Des Weiteren weist der Halter 10 eine Stütze 16 auf. Die Stütze 16 umfasst eine bogenförmig gewölbte Platte 18, deren Wölbung einer Krümmung einer Seitenwand 20 des Ablagefachs 12 entspricht. Die Platte 18 ist einstückig mit einer in Gebrauchslage vertikal angeordneten Schwenkwelle 22. Die Platte 18 steht in einer Richtung von der Schwenkwelle 22 ab. An einem der Schwenkwelle 22 fernen Ende weist die Platte 18 eine mit ihr einstückige und starre Taste 24 auf. Die Schwenkwelle 22 steht unter Bildung eines Schwenklagerzapfens 26 ein kurzes Stück nach oben über die Platte 18 über. Insgesamt weist die Schwenkwelle 22 eine Länge auf, die in etwa einer Höhe des Ablagefachs 12 entspricht. Nahe einem unteren Ende steht einstückig und starr ein plattenförmiger Arm 28 von der Schwenkwelle 22 ab, der in Draufsicht die Form eines spitzwinkligen Kreissektors aufweist. An einem Außenrand ist der Arm 28 mit einer Verzahnung 30 versehen, deren Zähne wie die Zähne eines Tellerrads auf einer Seite des plattenförmigen Arms 28 angeordnet sind. Die Verzahnung 30 ist kreisbogenförmig und konzentrisch zur Schwenkwelle 22 angeordnet. Auch am unteren Ende steht die Schwenkwelle 22 unter Bildung eines Schwenklagerzapfens 32 ein kurzes Stück über den Arm 28 über.

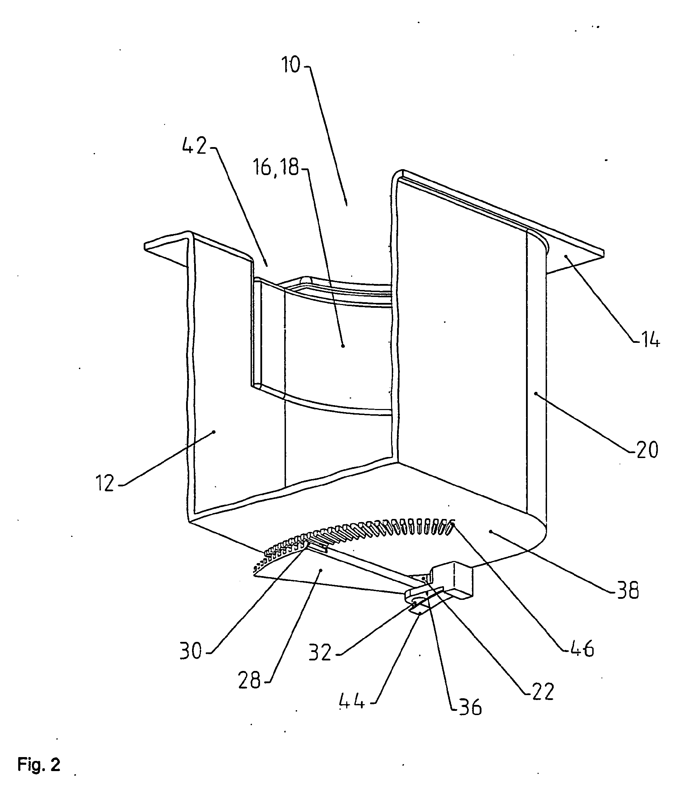

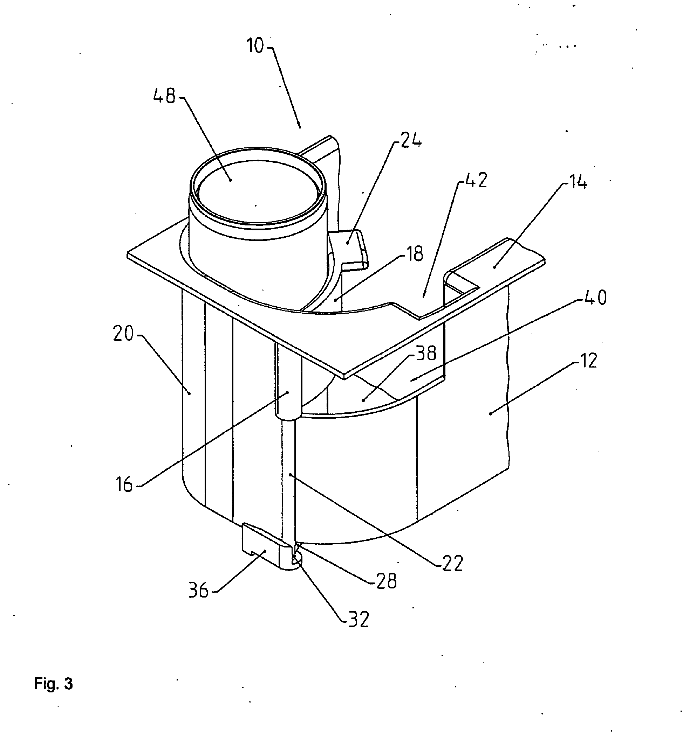

Beim Zusammenbau des Halters 10 werden die Schwenklagerzapfen 26, 32 der Stütze 16 in Lagerlöcher des Ablagefachs 12 eingesetzt. Ein oberes der beiden Lagerlöcher befindet sich an einer Unterseite des Einbaurandes 14 und ist in der Zeichnung nicht sichtbar. Ein unteres Lagerloch 34 ist in einer Lagerlasche 36 angebracht, die im Bereich eines Bodens 38 und an einer Außenseite des Ablagefachs 12 vorgesehen ist. Die Lagerlasche 36 ist einstückig mit dem Ablagefach 12. Die Schwenkwelle 22 befindet sich bei zusammengesetztem Halter 10 an einer Außenseite der Seitenwand 20, wie in Figur 3 zu sehen. Die Platte 18 der Stütze 16 befindet sich in einer Aussparung 40 der Seitenwand 20, die Taste 24 in einer Aussparung 42 im Einbaurand 14. Die Platte 18 lässt sich aus einer mit der Seitenwand 20 im Wesentlichen bündigen Schwenkstellung, wie sie in Figur 2 dargestellt ist, nach innen in das Ablagefach 12 hinein verschwenken, wie in Figur 3 zu stehen ist.

Eine Blattfeder 44 wird beim Zusammenbau an einer Unterseite der Lagerlasche 36 angebracht (Figur 2). Die Blattfeder 44 bildet ein Federelement, das axial gegen den unteren Schwenklagerzapfen 32 der Schwenkwelle 22 der Stütze 16 drückt. Die Blattfeder 44 drückt somit die Stütze 16 nach oben. Bei zusammengesetztem Halter 10 befindet sich der Arm 28 der Stütze 16 an einer Unterseite des Bodens 38 des Ablagefachs 12.

Wie in Figur 2 zu sehen weist der Boden 38 des Ablagefachs 12 eine Verzahnung 46 auf, die kreisbogenförmig und konzentrisch zur Schwenkwelle 22 angeordnet ist. Die Verzahnung 46 des Bodens 38 ist komplementär zur Verzahnung 30 des Arms 28 der Stütze 16. Die Blattfeder 44, die die Stütze 16 nach oben drückt, drückt die beiden Verzahnungen 30, 46 ineinander. Auf diese Weise ist die Stütze 16 drehfest in ihrer jeweiligen Schwenkstellung gehalten. Durch nach unten Drücken der Stütze 16 gegen die Kraft der Blattfeder 44, wie es in Figur 2 dargestellt ist, lassen sich die beiden Verzahnungen 30, 46 außer Eingriff bringen und die Stütze 16 kann verschwenkt werden. Wird die Stütze 16 anschließend losgelassen, drückt die Blattfeder 44 die Stütze 16 wieder nach oben und bringt dadurch die beiden Verzahnungen 30, 46 in Eingriff miteinander. Die Stütze 16 ist dadurch in ihrer jeweiligen Schwenkstellung drehfest gehalten. Das Niederdrücken und Schwenken der Stütze 16 erfolgt an der Taste 24 an der Oberseite der Stütze 16. Die beiden Verzahnungen 30, 46 bilden eine Rasteinrichtung des erfindungsgemäßen Halters, die die Stütze 16 drehfest in ihrer jeweiligen Schwenkstellung hält und die durch Druck auf die Stütze 16 von oben gegen die Kraft der Blattfeder 44 lösbar ist. Insgesamt bilden der Arm 28 der Stütze 16 mit seiner Verzahnung 30, die Verzahnung 46 am Boden 38 des Ablagefachs 12 und die Blattfeder 44 eine Rast- oder Feststelleinrichtung 28, 30, 44, 46 für die Stütze 16 des Halters 10. Die Verzahnung 30 des Arms 28 bildet ein Feststellelement der Feststelleinrichtung 28, 30, 44, 46, die Verzahnung 46 am Boden 38 des Ablagefachs 12 bildet ein ortsfestes Gegenelement für das Feststellelement. Die Feststelleinrichtung 28, 30, 44, 46 ist durch ihre Anordnung an der Unterseite des Bodens 38 des Ablagefachs 12 bei eingebautem Ablagefach 12 nicht sichtbar.

Wird die Platte 18 der Stütze 16 aus der Aussparung 40 in der Seitenwand 20 des Ablagefachs 12 nach innen in das Ablagefach 12 hinein verschwenkt, trennt sie einen Bereich vom Ablagefach 12 ab und begrenzt zwischen sich und der Seitenwand 20 des Ablagefachs 12 eine Aufnahme zum Einstellen eines Getränkebehälters wie beispielsweise der in Figur 3 dargestellten Getränkedose 48. Da die Stütze 16 in verschiedenen Schwenkstellungen feststellbar ist, ist ihr Abstand von der Seitenwand 20 einstellbar und dadurch der Halter 10 an den Durchmesser eines einzustellenden Getränkebehälters 48 anpassbar. Bei Nichtgebrauch wird die Stütze 16 so verschwenkt, dass sich ihre Platte 18 in der Aussparung 40 der Seitenwand 20 des Ablagefachs 12 befindet. Dadurch ist das Ablagefach 12 in seiner vollen Größe nutzbar.

Der erfindungsgemäße Halter 10 besteht im dargestellten und beschriebenen Ausführungsbeispiels aus lediglich drei Teilen, nämlich dem Ablagefach 12, mit dem die Lagerlochlasche 36 einstückig ist, der Stütze 16, die die Schwenkwelle 22, die Platte 18 und den Arm 28 umfasst, und der Blattfeder 44. Prinzipiell ist es denkbar, die Blattfeder 44 oder ein sonstiges Federelement einstückig aus Kunststoff mit dem Ablagefach 12 auszubilden, wodurch lediglich zwei Teile für den Halter 10 erforderlich wären.

## Patentansprüche

1. Halter für einen Getränkebehälter, mit einer eine Seitenwand (20) aufweisenden Aufnahme zum Einstellen des Getränkebehälters und mit einer um eine Schwenkachse schwenkbaren Stütze (16), deren Abstand von der Seitenwand (20) durch Schwenken der Stütze (16) einstellbar und die mit einer Feststelleinrichtung (28, 30, 44, 46) in ihrer jeweiligen Schwenkstellung feststellbar ist, wobei die Feststelleinrichtung (28, 30, 44, 46) ein Feststellelement (30) aufweist, das mit Abstand von der Schwenkachse der Stütze (16) angeordnet und drehfest mit der Stütze (16) verbunden ist und das von einem Federelement (44) gegen ein am Halter (10) ortsfestes Gegenelement (46) gedrückt wird, **dadurch gekennzeichnet, dass** das Feststellelement (30) durch Drücken auf die Stütze (16) in Richtung der Schwenkachse gegen eine Kraft des Federelements (44) vom Gegenelement (46) lösbar ist.

2. Halter nach Anspruch 1, **dadurch gekennzeichnet, dass** das Feststellelement (30) und/oder das Gegenelement (46) kreisbogenförmig und konzentrisch zur Schwenkachse der Stütze (16) angeordnet ist.

3. Halter nach Anspruch 2, **dadurch gekennzeichnet, dass** die Feststelleinrichtung (28, 30, 44, 46) eine Rasteinrichtung (30, 46) aufweist.

4. Halter nach Anspruch 3, **dadurch gekennzeichnet, dass** das Feststellelement (30) und das Gegenelement (46) eine Verzahnung (30, 46) aufweisen.

5. Halter nach Anspruch 1, **dadurch gekennzeichnet, dass** die Aufnahme zum Einstellen des Getränkebehälters (48) einen Boden (38) aufweist, und dass das Federelement (44) und das Gegenelement (46) an einer Unterseite des Bodens (38) angeordnet sind.

6. Halter nach Anspruch 1, **dadurch gekennzeichnet, dass** der Halter (10) ein Ablagefach (12) mit einer Seitenwand (20) aufweist, wobei ein mit der Stütze (16) vom übrigen Ablagefach (12) abtrennbarer Teil des Ablagefachs (12) zwischen der Stütze (16) und der Seitenwand (20) des Ablagefachs (12) die Aufnahme zum Einstellen des Getränkebehälters (48) bildet, und dass die Stütze (16) schwenkbar am Ablagefach (12) gelagert ist.

## Claims

1. Holder for a drinks container, having a receptacle for insertion of the drinks container, which receptacle has a side wall (20), and having a support (16) which can be pivoted about a pivot axis, the spacing of which support from the side wall (20) is adjustable by pivoting the support (16), and which support can be fixed in any of its pivoted positions by means of a fixing device (28, 30, 44, 46), the fixing device (28, 30, 44, 46) having a fixing element (30) which is arranged spaced away from the pivot axis of the support (16) and connected to the support (16) so as to turn conjointly therewith and which is biased by a spring element (44) against a counterpart element (46) in a stationary position on the holder (10), **characterised in that** the fixing element (30) is releasable from the counterpart element (46) by pressing on the support (16) in the direction of the pivot axis against the force of the spring element (44).

2. Holder according to claim 1, **characterised in that** the fixing element (30) and/or the counterpart element (46) is/are in the shape of an arc of a circle and is/are concentrically arranged with respect to the pivot axis of the support (16).

3. Holder according to claim 2, **characterised in that** the fixing device (28, 30, 44, 46) has a click-in catch device (30, 46).

4. Holder according to claim 3, **characterised in that** the fixing element (30) and the counterpart element (46) have a toothed arrangement (30, 46).

5. Holder according to claim 1, **characterised in that** the receptacle for insertion of the drinks container (48) has a base (38), and **in that** the spring element (44) and the counterpart element (46) are arranged on the underside of the base (38).

6. Holder according to claim 1, **characterised in that** the holder (10) has a storage compartment (12) provided with a side wall (20), a part of the storage compartment (12) which can be separated off from the rest of the storage compartment (12) by means of the support (16) forming, between the support (16) and the side wall (20) of the storage compartment (12), the receptacle for insertion of the drinks container (48), and **in that** the support (16) is pivotally mounted on the storage compartment (12).

## Revendications

1. Support pour un récipient de boisson, pourvu d'un logement présentant une paroi latérale (20) pour mise en place du récipient de boisson et d'un appui (16) pouvant pivoter autour d'un axe de pivotement, dont l'écart par rapport à la paroi latérale (20) peut être réglé en pivotant l'appui (16) et qui peut être fixé à l'aide d'un dispositif de fixation (28, 30, 44, 46) dans sa position de pivotement respective, le dispositif de fixation (28, 30, 44, 46) présentant un élément de fixation (30) qui est disposé à distance de l'axe de pivotement de l'appui (16) et est relié de manière solidaire en rotation à l'appui (16) et qui est pressé par un élément de ressort (44) contre un élément antagoniste (46) fixé sur le support (10), **caractérisé en ce que** l'élément de fixation (30) peut être détaché de l'élément antagoniste (46) en pressant l'appui (16) en direction de l'axe de pivotement contre une force de l'élément de ressort (44).

2. Support selon la revendication 1, **caractérisé en ce que** l'élément de fixation (30) et/ou l'élément antagoniste (46) est en forme d'arc de cercle et disposé de manière concentrique par rapport à l'axe de pivotement de l'appui (16).

3. Support selon la revendication 2, **caractérisé en ce que** le dispositif de fixation (28, 30, 44, 46) présente un dispositif d'encliquetage (30, 46).

4. Support selon la revendication 3, **caractérisé en ce que** l'élément de fixation (30) et l'élément antagoniste (46) présentent une denture (30, 46).

5. Support selon la revendication 1, **caractérisé en ce que** le logement pour la mise en place du récipient de boisson (48) présente un fond (38) et **en ce que** l'élément de ressort (44) et l'élément antagoniste (46) sont disposés sur une face inférieure du fond (38).

6. Support selon la revendication 1, **caractérisé en ce que** le support (10) présente une case de réception (12) pourvue d'une paroi latérale (20), une partie de la case de réception (12) pouvant être séparée avec l'appui (16) du reste de la case de réception (12) formant le logement de mise en place du récipient de boisson (48) entre l'appui (16) et la paroi latérale (20) de la case de réception (12) et **en ce que** l'appui (16) est logé de manière pivotante sur la case de réception (12).
